# EUROPEAN PATENT SPECIFICATION

(11) **EP 0 861 156 B1**
(45) Date of publication and mention of the grant of the patent: **26.04.2000**
(21) Application number: 96933572.8
(22) Date of filing: 23.10.1996
(51) Int. Cl.: B42D 15/00

(54) **SECURITY DOCUMENT WITH SECURITY MARKING**
SICHERHEITSDOKUMENT MIT SICHERHEITSMARKIERUNG
DOCUMENT DE VALEUR A MARQUAGE DE SECURITE

(30) Priority: 13.11.1995 EP 95117830; 13.04.1996 EP 96105835
(43) Date of publication of application: 02.09.1998
(73) Proprietor: Orell Füssli Banknote Engineering Ltd., 8036 Zürich (CH)
(72) Inventor: ZINTZMEYER, Jörg, CH-8703 Erlenbach (CH); COLEMAN, John, R., CH-8032 Zürich (CH)
(74) Representative: Blum, Rudolf Emil Ernst
(86) International application number: IB9601140
(87) International publication number: WO9718092

(56) References cited:
- WO-A-95/26274
- DE-A- 3 634 098
- DE-U- 9 315 294
- US-A- 4 939 888

## Description

### Technical Field

The invention relates to security documents with security markings, in particular security markings formed by holes, as well as a method for producing same, according to the preamble of the independent claims.

Security documents can be documents representing a value, such as cheques, shares, etc., especially bank notes, but also documents of identification, such as passports, identity cards, access authorisation documents, etc.

### Background Art

In order to make falsification and counterfeiting difficult, security documents are usually provided with security markings, such as watermarks, Kinegrams, fluorescent marks, etc. Many conventional marks have, however, the disadvantage that they are difficult to produce or easy to forge and/or that they can hardly be verified without technical equipment by the layman.

WO 95/26274 describes a carrier representing a value provided with recognisable patterns formed by holes. The holes are created with a laser beam. The presence of the holes can easily be detected by the eye. However, it is still difficult to verify if the holes are created by a laser or not. To allow verification, it is therefore proposed to make part of the hole patterns so fine that they can only be made visible by means of appliances. This, however, has the disadvantage of requiring special equipment for verification.

### Disclosure of the Invention

Hence, it is a general object of the invention to provide a security document with security markings of this type that are easily verified without special knowledge or equipment. It is also an object of the invention to provide a method for the production of such security documents.

This object is implemented by the document and method of the independent claims.

By using holes having a diameter chosen such that they are invisible when looking at them in reflection while they are visible with the naked eye when viewed in transmission (i.e. when looking through them, e.g. by holding them in front of a source of light), the security marking can easily be verified without special equipment. Holes with this properties preferably have diameters between 85 and 130 µm. In another embodiment, the diameter is between 85 and 115 µm, preferably between 100 and 110 µm.

Holes having these properties can be prepared with laser light (or other suitable radiation) as well as with discharge sparks while they can hardly be created with mechanical means.

The recognisability of the marking is increased when the holes are arranged in an absorbing, substantially completely coloured, printed or coated area. In such an area, the transmission of the document is low and the holes are well visible when holding the document against a light source.

Preferably, the holes have an elongate cross section. Such holes can be produced with a higher rate because the document or the laser beam can be moved while burning the hole. In order to provide elongate holes that are difficult or impossible to recognise in reflection while they can easily be seen in transmission, the shortest diameter of the holes is preferably between 85 and 130 µm, while the largest diameter is preferably below 170 µm, preferably between 110 and 170 µm.

The security document can e.g. be a banknote, cheque, share, identification document, etc.

Other preferred features are described in the dependent claims.

### Brief Description of the Drawings

The invention will be better understood and objects other than those set forth above will become apparent when consideration is given to the following detailed description thereof. Such description makes reference to the annexed drawings, wherein:
Fig. 1 is a security document according to the invention, wherein the hole pattern, which is usually not or hardly visible in reflection, is represented by black dots of exaggerated size,
Fig. 2 is a schematic detailed view of the bank note of Fig. 1,
Fig. 3 is a schematic representation of a method of production for the security document, and
Fig. 4 is a schematic detailed view of a second embodiment of the holes.

### Modes for Carrying Out the Invention

In the following, the invention is shown in the embodiment of a bank note. However, it is not limited to bank notes and can be applied to any other type of security document, preferably having a paper carrier, especially documents representing a value and identification documents.

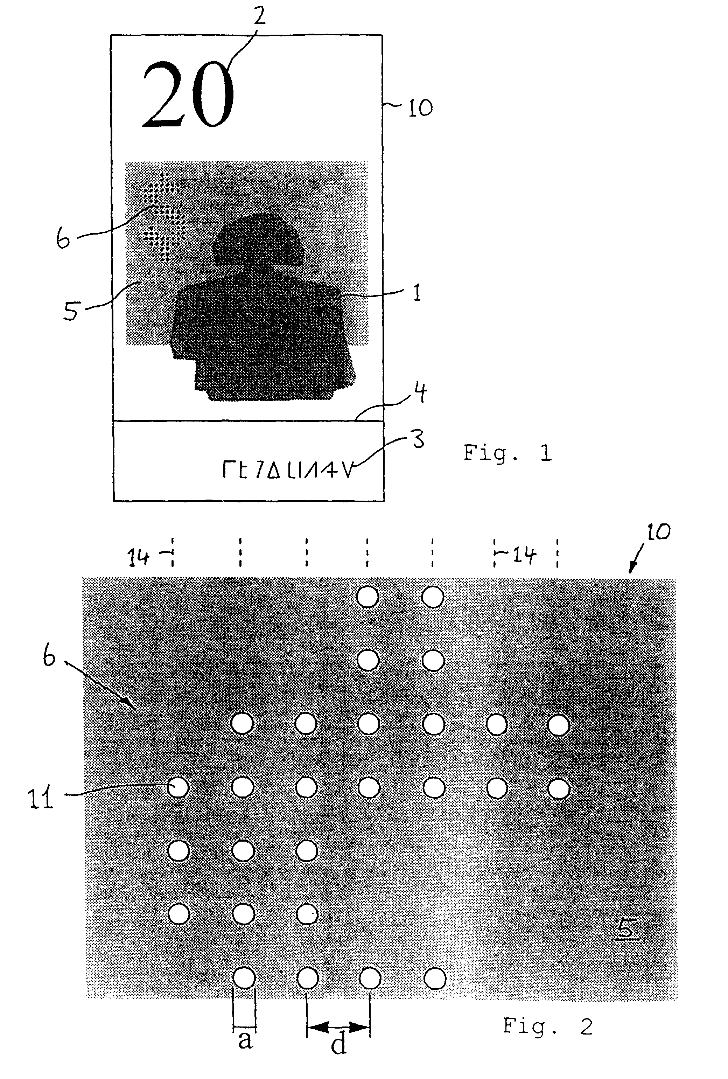

The design of a possible embodiment of the document or bank note 10, respectively, is shown in Figs. 1 and 2. It has been printed in conventional manner with various motifs 1 - 5. In addition to this, it comprises a security marking 6. This marking is represented by exaggerated black dots in Fig. 1. In reality it is practically invisible for the inexperienced observer when viewed in reflection without optical aids. It consists of a two dimensional pattern of holes 11, as they are shown in Fig. 2. Each hole extends through bank note 10. When the bank note is held against the light, the holes 11 can be seen as bright spots with the naked eye, i.e. without the help of any technical equipment.

Since the pattern extends in two dimensions, it can form a sign familiar to the observer, such as a letter or a number. This makes a verification of the marking easier.

As described in detail below, production of the pattern is easier when the pattern is arranged in several, parallel rows 14. However, it is also possible to use a pattern with non parallel rows.

To improve contrast, the whole security marking 6 is arranged in a field 5 of the bank note that is substantially completely coloured, covered with printing or coated, i.e. the colour, printing or coating is either uniform or has a structure much finer than the holes. The optical transmission of the note in this area is therefore low, such that the surroundings of the security marking 6 appears dark when held against the light while the bright holes 11 are clearly visible.

The area 5 should extend at least over part of security marking 6 (i.e. several holes 11), preferably the whole security marking 6, for providing a good visibility of the marking.

The diameter **a** of the holes 11 is preferably in the range of 85 to 130 µm, more preferably between 85 and 115 µm. When using smaller diameters the holes are difficult to recognise and irregularities in the margins of the holes lead to an irregular hole size. When using larger diameters, the holes become visible in reflection. Best results are achieved with diameters around 100 to 110 pm.

The mutual distance **d** between the holes should be at least 700 µm. A smaller distance **d** weakens the paper and can lead to tears between the holes.

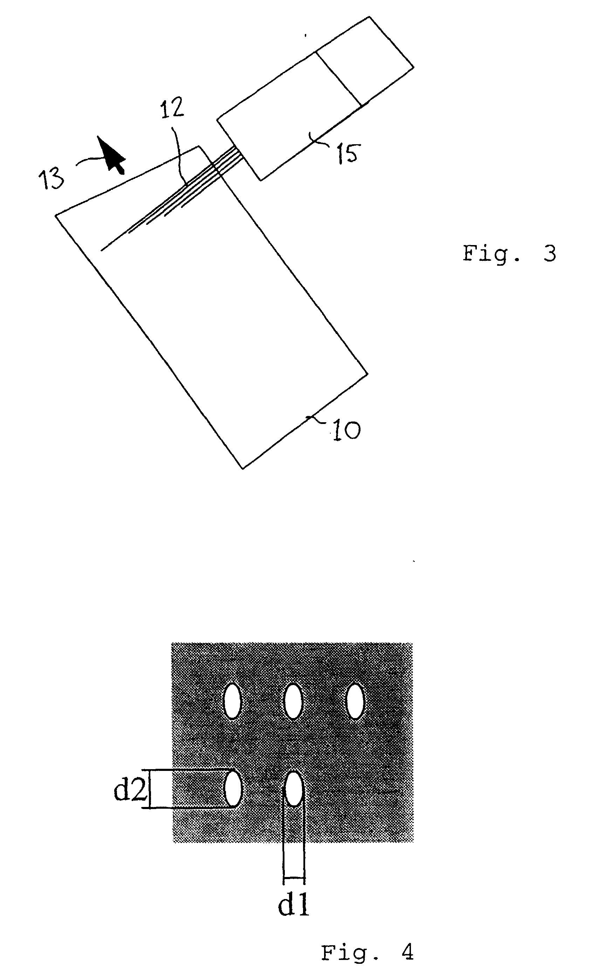

For producing security marking 6, the bank note 10 is e.g. hit simultaneously by several pulsed laser beams 12, such as it is shown schematically in Fig.3. The laser beams are arranged in a row beside each other. The fully printed bank notes 10 are moved individually or in groups on sheets through the beams into a direction 13. Direction 13 is perpendicular to the row of laser beams. The number of laser beams depends on the desired width or numbers of rows 14 of the security marking. By suitable pulse modulation of the laser beams the hole security marking 6 can be generated in a single pass.

The laser source 15 can e.g. be an arrangement of one or more Nd:YAG lasers, because these lasers allow the generation of short pulses and therefore high rates of production.

For applying the security marking 6 to a bank note 10 of pure cotton paper with a thickness between 80 and 95 µm pulses with an energy of 3 - 4 mJ and a duration of 80 nS with a wavelength of 1.064 µm can be used. The laser beams are focused to a theoretical diameter of 20 - 22 µm. The effective Gaussian beam diameter is difficult to measure directly - it is expected to be between 10 and 30 µm.

The holes generated in this way have a typical diameter between 100 and 110 µm independently of any printing present on the note. They are well visible in transmission with the naked eye while they are invisible in reflection. No sharp edges or burs are formed around the holes. The paper's resistance to tearing is not affected.

The security marking according to the invention can be combined with further conventional markings, such as water marks, Kinegrams, etc.

For further security, the holes 11 can also be aligned to marks printed on the bank note.

In the above examples, a bank note on a paper carrier has been described. However, the invention can also be used with other carriers, such as plastic carriers.

In the examples shown so far, the holes have a round cross section. However, it is also possible to use holes with a non-round cross section, such as holes with elongate or polygonal cross section.

A preferred embodiment of elongate holes is shown in Fig. 4. The holes shown here have roughly ellipsoidal shape with a shortest diameter **d1** and a longest diameter **d2. d1** is preferably in the range of 85 - 130 µm, **d2** is smaller than 170 µm, preferably 110 - 170 µm. Holes having such a size are barely visible in reflection while being clearly visible in transmission.

The elongate holes 11 are arranged parallel to each other.

Holes of the type shown in Fig. 4 can be generated in an efficient manner by aligning their longitudinal axis with the direction of the relative movement between the notes and the laser beam(s). By moving the notes or beams during application of the laser pulses, elongate holes are formed automatically. This allows a continues movement of the notes or laser beam(s) during the application of the laser pulses and therefore a larger production rate for a given pulse length.

According to a further embodiment of the invention, a single laser beam is used for creating the perforations, which beam is deflected appropriately for generating a desired pattern, which also allows the production of non-parallel rows of holes. It is preferred to move the paper in one direction while deflecting the laser beam in a direction transversally thereto, such that a similar situation as shown in Fig. 3 results, with the individual beams of Fig. 3 corresponding to different positions of a single laser beam. The deflection allows the generation of any arbitrary pattern, which can be more complex than a simple row or rows of holes. The laser can e.g. be a CO₂ laser with a wavelength of 10.6 µm. An acousto-optic deflector with high acoustic band width can be used for beam deflection. Furthermore, a focusing lens is used, the focal width of which is determined in known manner by the diameter of the holes and the properties of the laser beam (beam diameter, beam quality). The speed of the note movement and the pulse repetition rate are adjusted for generating the desired pattern. Preferably the perforation occurs under a protecting gas, such as nitrogen, which prevents a burning of the notes. The protecting gas can also extend to the focusing lens for preventing contaminations thereon.

Preferably, a detector is arranged on the side of the paper facing away from the laser, which detects the laser beam and therefore immediately recognises if a hole has been perforated or not. The sensor is connected to a control unit, which controls the generation of the perforations.

While there are shown and described presently preferred embodiments of the invention, it is to be distinctly understood that the invention is not limited thereto but may be otherwise variously embodied and practised within the scope of the following claims.

## Claims

1. Security document with a security marking (6) for preventing forgery, wherein the security marking comprises a plurality of holes (11), which form a pattern on the document that is visible in transmission, characterised in that the diameter (a, dl, d2) of the holes (11) is such that the pattern is invisible in reflection with the naked eye.

2. Security document of claim 1 characterised in that the holes (11) form a two-dimensional pattern on the document.

3. Security document of any one of the preceding claims characterised in that the holes (11) have a diameter (a) between 85 and 130 µm.

4. Security document of any one of the preceding claims characterised in that the holes (11) have a diameter (a) between 85 and 115 µm, preferably between 100 to 110 µm.

5. Security document of any one of the preceding claims characterised in that for improving the contrast of the pattern visible in transmission the holes (11) are arranged in an absorbing area (5), which area is substantially completely coloured, printed or coated.

6. Security document of any one of the preceding claims characterised in that the mutual distance (d) of the holes (11) is at least 700 µm.

7. Security document of any one of the preceding claims characterised in that the holes (11) are arranged on several, parallel rows (14).

8. Security document of any one of the preceding claims characterised in that it is a document representing a value, in particular a bank note.

9. Security document of any one of the claims 1 - 7, characterised in that it is a identification document.

10. Security document of any one of the preceding claims characterised in that each hole has elongate cross section with a long and a short axis.

11. Security document of claim 10 characterised in that the long and short axes of the holes (11) are parallel.

12. Security document of any one of the claims 10 or 11 characterised in that said short axis of the holes has a length between 85 and 130 µm.

13. Security document of any one of the claims 10 to 12 characterised in that the long axis of the holes has a length between below 170 µm, preferably between 110 and 170 µm.

14. Security document with security marking (6) for preventing forgery, wherein the security marking comprises a plurality of holes (11), which form a pattern on the document, characterized in that the diameter (a) of the holes (11) is such that, with the naked eye, the pattern is substantially invisible in reflection but visible in transmission.

15. Method for producing a security document with a security marking, wherein for forming said security marking a pattern of holes (11) is created in the document by a laser beam, characterised in that the diameter of the holes is such that, with the naked eye, the pattern is substantially invisible in reflection but visible in transmission.

16. Method of claim 15 characterised in that the laser beam (12) has a wavelength of approximately 1 µm.

17. Method of claim 15 characterised in that the laser beam (12) has a wavelength of approximately 10.6 µm.

18. Method of any one of the claims 15 to 17 characterised in that the laser beam (12) is generated by means of a Nd:YAG laser.

19. Method of any one of the claims 15 to 18 characterised in that the laser beam (12) is generated by means of a CO₂ laser.

20. Method of any one of the claims 15 to 19 characterised in that for generating a two dimensional hole pattern the security document is simultaneously hit with a plurality of laser beams (12).

21. Method of claim 20 characterised in that the laser beams (12) are arranged in a row and the security document is moved perpendicularly to said row.

22. Method of any one of the claims 15 to 21 characterised in that at least one acousto-optic beam deflector is used for deflecting the laser beam from one hole to another.

23. Method of any one of the claims 15 to 22 characterised in that elongate holes are generated by moving the document while burning the holes with the laser beam.

24. Method of any one of the claims 15 to 23 characterised in that a protecting gas is applied while forming the holes for preventing a burning of the security document.

25. Use of a plurality of holes (11) in a security document, which holes form a pattern on the document that is visible in transmission, for the purpose of a security marking for preventing forgery, characterized in that the diameter (a, d1, d2) of the holes (11) is such that the pattern is invisible in reflection with the naked eye.

## Patentansprüche

1. Sicherheitsdokument mit einer Sicherheitsmarkierung (6) zur Verhinderung von Fälschungen, wobei die Sicherheitsmarkierung eine Vielzahl von Löchern (11) aufweist, welche auf dem Dokument ein in Transmission sichtbares Muster bilden, dadurch gekennzeichnet, dass der Durchmesser (a, d1, d2) der Löcher (11) so ist, dass das Muster in Reflexion für das blosse Auge unsichtbar ist.

2. Sicherheitsdokument nach Anspruch 1, dadurch gekennzeichnet, dass die Löcher (11) auf dem Dokument ein zweidimensionales Muster ergeben.

3. Sicherheitsdokument nach einem der vorangehenden Ansprüche, dadurch gekennzeichnet, dass die Löcher (11) einen Durchmesser (a) zwischen 85 und 130 µm aufweisen.

4. Sicherheitsdokument nach einem der vorangehenden Ansprüche, dadurch gekennzeichnet, dass die Löcher (11) einen Durchmesser (a) zwischen 85 und 115 µm, vorzugsweise 100 bis 110 µm, aufweisen.

5. Sicherheitsdokument nach einem der vorangehenden Ansprüche, dadurch gekennzeichnet, dass zur Verbesserung des Kontrastes des in Transmission sichtbaren Musters die Löcher (11) in einem absorbierenden Bereich (5) angeordnet sind, wobei der Bereich im wesentlichen vollständig gefärbt, bedruckt oder beschichtet ist.

6. Sicherheitsdokument nach einem der vorangehenden Ansprüche, dadurch gekennzeichnet, dass der gegenseitige Abstand (d) der Löcher (11) mindestens 700 µm beträgt.

7. Sicherheitsdokument nach einem der vorangehenden Ansprüche, dadurch gekennzeichnet, dass die Löcher (11) auf mehreren, parallelen Bahnen (14) angeordnet sind.

8. Sicherheitsdokument einem der vorangehenden Ansprüche, dadurch gekennzeichnet, dass es ein Wertpapier und insbesondere eine Banknote ist.

9. Sicherheitsdokument einem der Ansprüche 1 - 7, dadurch gekennzeichnet, dass es ein Identifikationsdokument ist.

10. Sicherheitsdokument nach einem der vorangehenden Ansprüche, dadurch gekennzeichnet, dass jedes Loch länglichen Querschnitt mit einer langen und einer kurzen Achse besitzt.

11. Sicherheitsdokument nach Anspruch 10, dadurch gekennzeichnet, dass die langen und die kurzen Achsen der Löcher (11) parallel sind.

12. Sicherheitsdokument nach einem der Ansprüche 10 oder 11, dadurch gekennzeichnet, dass die kurze Achse der Löcher eine Länge zwischen 85 und 130 µm hat.

13. Sicherheitsdokument nach einem der Ansprüche 10 bis 12, dadurch gekennzeichnet, dass die lange Achse der Löcher eine Länge unterhalb 170 µm, vorzugsweise zwischen 110 und 170 µm hat.

14. Sicherheitsdokument mit einer Sicherheitsmarkierung (6) zur Verhinderung von Fälschungen, wobei die Sicherheitsmarkierung eine Vielzahl von Löchern (11) aufweist, welche auf dem Dokument ein Muster bilden, dadurch gekennzeichnet, dass der Durchmesser (a) der Löcher (11) so ist, dass für das blosse Auge das Muster in Reflexion im wesentlichen unsichtbar, aber in Transmission sichtbar ist.

15. Verfahren zur Herstellung eines Sicherheitsdokuments mit Sicherheitsmarkierung, wobei zum bilden der Sicherheitsmarkierung mit einem Laserstrahl ein Muster von Löchern (11) im Dokument erzeugt wird, dadurch gekennzeichnet, dass der Durchmesser der Löcher so ist dass das Muster mit dem blossen Auge im wesentlichen unsichtbar in Reflexion aber sichtbar in Transmission ist.

16. Verfahren nach Anspruch 15, dadurch gekennzeichnet, dass der Laserstrahl (12) eine Wellenlänge von etwa 1 µm aufweist.

17. Verfahren nach Anspruch 15, dadurch gekennzeichnet, dass der Laserstrahl (12) eine Wellenlänge von etwa 10,6 µm aufweist.

18. Verfahren nach einem der Ansprüche 15 bis 17, dadurch gekennzeichnet, dass der Laserstrahl (12) mit einem Nd:YAG - Laser erzeugt wird.

19. Verfahren nach einem der Ansprüche 15 bis 18, dadurch gekennzeichnet, dass der Laserstrahl (12) mit einem CO₂-Laser erzeugt wird.

20. Verfahren nach einem der Ansprüche 15 bis 19, dadurch gekennzeichnet, dass zur Erzeugung eines zweidimensionalen Lochmusters das Sicherheitsdokument gleichzeitig von mehreren Laserstrahlen (12) beaufschlagt wird.

21. Verfahren nach Anspruch 20, dadurch gekennzeichnet, dass die Laserstrahlen (12) in einer Reihe angeordnet sind und das Sicherheitsdokument senkrecht zur Reihe bewegt wird.

22. Verfahren nach einem der Ansprüche 15 bis 21, dadurch gekennzeichnet, dass mindestens ein akustooptischer Strahlablenker verwendet wird um den Laserstrahl von einem Loch zum anderen abzulenken.

23. Verfahren nach einem der Ansprüche 15 bis 22, dadurch gekennzeichnet, dass längliche Löcher erzeugt werden, indem das Dokument bewegt wird, während die Löcher mit dem Laserstrahl eingebrannt werden.

24. Verfahren nach einem der Ansprüche 15 bis 23, dadurch gekennzeichnet, dass zur Vermeidung einer Verbrennung des Sicherheitsdokuments ein Schutzgas angewandt wird, während die Löcher gebildet werden.

25. Verwendung einer Vielzahl von Löchern (11) in einem Sicherheitsdokument, wobei die Löcher Muster auf dem Dokument bilden, welches in Transmission sichtbar ist, zum Zweck einer Sicherheitsmarkierung zur Verhinderung von Fälschungen, dadurch gekennzeichnet, dass der Durchmesser (a, d1, d2) der Löcher (11) so ist, dass das Muster für das blosse Auge in Reflexion unsichtbar ist.

## Revendications

1. Document sécurisé avec une estampille de sécurité (6) pour éviter les contrefaçons, l'estampille comprenant plusieurs trous (11) formant sur le document un dessin visible par transmission, caractérisé en ce que les trous (11) ont un diamètre (a, d1, d2) tel que le dessin est invisible à l'oeil nu en lumière réfléchie.

2. Document sécurisé selon la revendication 1, caractérisé en ce que les trous (11) forment un dessin bidimensionnel sur le document.

3. Document sécurisé selon une des revendications précédentes, caractérisé en ce que les trous (11) ont un diamètre (a) compris entre 85 et 130 µm.

4. Document sécurisé selon une des revendications précédentes, caractérisé en ce que les trous (11) ont un diamètre (a) compris entre 85 et 115 µm, et de préférence entre 100 et 110 µm.

5. Document sécurisé selon une des revendications précédentes, caractérisé en ce que pour améliorer le contraste du dessin visible par transmission les trous (11) sont placés dans une région absorbante (5) qui est pour l'essentiel entièrement colorée, imprimée, ou revêtue d'une couche.

6. Document sécurisé selon une des revendications précédentes, caractérisé en ce que l'espacement mutuel (d) des trous (11) est d'au moins 700 µm.

7. Document sécurisé selon une des revendications précédentes, caractérisé en ce que les trous (11) sont placés le long de plusieurs rangées parallèles (14).

8. Document sécurisé selon une des revendications précédentes, caractérisé en ce qu'il s'agit d'un document représentant une certaine valeur, en particulier d'un billet de banque.

9. Document sécurisé selon une des revendications 1 à 7, caractérisé en ce qu'il s'agit d'un document d'identification.

10. Document sécurisé selon une des revendications précédentes, caractérisé en ce que chaque trou possède une forme allongée, avec un grand et un petit axe.

11. Document sécurisé selon la revendication 10, caractérisé en ce que les grands et les petits axes des trous (11) sont parallèles.

12. Document sécurisé selon une des revendications 10 ou 11, caractérisé en ce que la longueur du petit axe des trous est comprise entre 85 et 130 µm.

13. Document sécurisé selon une des revendications 10 à 12, caractérisé en ce que la longueur du grand axe des trous est inférieure à 170 µm, et de préférence comprise entre 110 et 170 µm.

14. Document sécurisé avec une estampille de sécurité (6) pour éviter les contrefaçons, l'estampille comprenant plusieurs trous (11) formant un dessin sur le document, caractérisé en ce que le diamètre (a) des trous (11) est tel qu'à l'oeil nu le dessin soit essentiellement invisible en lumière réfléchie, mais visible par transmission.

15. Procédé pour fabriquer un document sécurisé avec une estampille de sécurité réalisée en formant sur le document un dessin fait de trous (11) produits par rayon laser, caractérisé en ce que le diamètre des trous (11) est choisi de façon à ce qu'à l'oeil nu le dessin soit essentiellement invisible en lumière réfléchie, mais visible par transmission.

16. Procédé selon la revendication 15, caractérisé en ce que le rayon laser (12) a une longueur d'onde d'environ 1 µm.

17. Procédé selon la revendication 15, caractérisé en ce que le rayon laser (12) a une longueur d'onde d'environ 10.6 µm.

18. Procédé selon une des revendications 15 à 17, caractérisé en ce qu'on produit le rayon laser (12) au moyen d'un laser Nd:YAG.

19. Procédé selon une des revendications 15 à 18, caractérisé en ce qu'on produit le rayon laser (12) au moyen d'un laser à CO₂.

20. Procédé selon une des revendications 15 à 19, caractérisé en ce que pour produire un dessin bidimensionnel on fait agir simultanément plusieurs rayons laser (12) sur le document.

21. Procédé selon la revendication 20, caractérisé en ce que les rayons laser (12) sont alignés sur une rangée et que l'on déplace le document à sécuriser perpendiculairement à celle-ci.

22. Procédé selon une des revendications 15 à 21, caractérisé en ce que l'on utilise au moins un déflecteur opto-acoustique pour faire dévier le rayon laser d'un trou à l'autre.

23. Procédé selon une des revendications 15 à 22, caractérisé en ce que l'on forme des trous allongés en déplaçant le document pendant le forage des trous par rayon laser.

24. Procédé selon une des revendications 15 à 23, caractérisé en ce que l'on utilise un gaz de protection pendant le forage des trous pour éviter une brûlure du document à sécuriser.

25. Utilisation d'un ensemble de trous (11) sur un document sécurisé sur lequel ils forment un dessin visible par transmission afin de produire une estampille de sécurité évitant la contrefaçon, caractérisé en ce que le diamètre (a, d1, d2) des trous est choisi de façon à rendre le dessin invisible à l'oeil nu en lumière réfléchie.
